# EUROPÄISCHE PATENTSCHRIFT

(11) **EP 3 528 370 B1**
(45) Veröffentlichungstag und Bekanntmachung des Hinweises auf die Patenterteilung: **03.03.2021**
(21) Anmeldenummer: 19151769.7
(22) Anmeldetag: 15.01.2019
(51) Int. Cl.: H02K 3/52

(54) **STATOR MIT EINER WICKLUNGSVERSCHALTUNG**
STATOR WITH COIL WIRING
STATOR POURVU DE CIRCUIT D'ENROULEMENT

(30) Priorität: 16.02.2018 DE 102018202408
(43) Veröffentlichungstag der Anmeldung: 21.08.2019
(73) Patentinhaber: Bühler Motor GmbH, 90459 Nürnberg (DE)
(72) Erfinder: Günther, Heinz, 90522 Oberasbach (DE); Gundermann, Martin, 90402 Nürnberg (DE); Hettych, Reiner, 90471 Nürnberg (DE)

(56) Entgegenhaltungen:
- EP-A1- 2 624 415
- EP-A2- 3 151 389
- DE-A1-102012 020 329
- DE-A1-102014 201 637
- JP-A- 2017 085 756
- US-A1- 2002 047 365

## Beschreibung

Die Erfindung betrifft einen Stator eines elektronisch kommutierten Gleichstrommotors, mit einem Statorkern, einer Isolierkappe (3), einer Statorwicklung und einer Wicklungsverschaltung (5), wobei die Wicklungsverschaltung (5) aus mehreren Blechelementen (8) und mehreren Isolierelementen (10) besteht, welche zwischen den Blechelementen (8) angeordnet sind.

Eine Vielzahl von Wicklungsverschaltungen für Statorwicklungen sind bekannt, bei denen Blechelemente als Leit- und Kontaktelement eingesetzt werden. In der Regel besitzen diese Blechelemente isolierende Beschichtungen, um Kurzschlüsse zwischen mehreren Blechelementen zu vermeiden oder sie sind in voneinander getrennten Aufnahmenuten aufgenommen. Oft sind diese Blechelemente umspritzt, um eine kompakte Baueinheit zu erhalten. Beim Einlegen von Blechelementen in Aufnahmenuten können Ungenauigkeiten der Blechelemente zu Schwierigkeiten führen. Die Blechelemente sind bei diesen Ausführungen oft ringförmig gebogen und konzentrisch angeordnet. Solche Wicklungsverschaltungen erfordern einen erheblichen Werkzeug- und Herstellaufwand.

Aus der EP 2 624 415 A1 ist ein Stator eines elektronisch kommutierten Gleichstrommotors bekannt, mit einem Statorkern, einer Isolierkappe, einer Statorwicklung und einer Wicklungsverschaltung, wobei die Wicklungsverschaltung aus mehreren Blechelementen und mehreren Isolierelementen besteht, welche zwischen den Blechelementen angeordnet sind, wobei die Blechelemente und die Isolierelemente durch einen Halter an der Isolierkappe fixiert sind.

Die DE 10 2012 020 329 A1 offenbart einen Stator eines elektronisch kommutierten Gleichstrommotors, mit einem Statorkern, einer Isolierkappe, einer Statorwicklung und einer Wicklungsverschaltung, wobei die Wicklungsverschaltung aus mehreren Blechelementen und mehreren Isolierelementen besteht, welche zwischen den Blechelementen angeordnet sind, wobei die Blechelemente und die Isolierelemente durch einen Halter an der Isolierkappe fixiert sind.

Aus der US 2002/047365 A1 ist ein Stator eines elektronisch kommutierten Gleichstrommotors bekannt, mit einem Statorkern, einer Isolierkappe, einer Statorwicklung und einer Wicklungsverschaltung, wobei die Wicklungsverschaltung aus mehreren Blechelementen und mehreren Isolierelementen besteht, welche zwischen den Blechelementen angeordnet sind, wobei die Blechelemente und die Isolierelemente durch einen Halter an der Isolierkappe fixiert sind.

Die EP 3 151 389 A2 offenbart einen Stator eines elektronisch kommutierten Gleichstrommotors, mit einem Statorkern, einer Isolierkappe, einer Statorwicklung und einer Wicklungsverschaltung, wobei die Wicklungsverschaltung aus mehreren Blechelementen und mehreren Isolierelementen besteht, welche zwischen den Blechelementen angeordnet sind, wobei die Blechelemente und die Isolierelemente durch einen Halter an der Isolierkappe fixiert sind.

Aus der DE 10 2014 201 637 A1 ist ein Stator eines elektronisch kommutierten Gleichstrommotors bekannt, mit einem Statorkern, einer Isolierkappe, einer Statorwicklung und einer Wicklungsverschaltung, wobei die Wicklungsverschaltung aus mehreren Blechelementen und mehreren Isolierelementen besteht, welche zwischen den Blechelementen angeordnet sind, wobei die Blechelemente und die Isolierelemente durch einen Halter an der Isolierkappe fixiert sind.

Die JP 2017 085 756 A offenbart einen Stator eines elektronisch kommutierten Gleichstrommotors, mit einem Statorkern, einer Isolierkappe, einer Statorwicklung und einer Wicklungsverschaltung, wobei die Blechelemente und die Isolierelemente durch einen Halter an die Köpfe der Isolierspulen fixiert sind.

Aufgabe der Erfindung ist es daher bei einem gattungsgemäßen Stator für einen einfachen Aufbau aus einfach herzustellenden und einfach geformten Bauteilen zu sorgen, wobei Fertigungstoleranzen auf einfache Weise kompensiert werden können. Eine weitere Aufgabe besteht darin zuverlässige und erprobte Fertigungsprozesse einsetzen zu können, welche möglichst einfach zu überwachen sind.

Diese Aufgabe wird erfindungsgemäß durch die Merkmale des Anspruchs 1 und des Verfahrens gemäß Anspruch 23 oder Anspruch 24 gelöst. Da die Blechelemente (8) und die Isolierelemente (10) durch einen Halter (7) an der Isolierkappe (3) fixiert sind, ist eine zuverlässige Montage und spielfreie Halterung der lose geschichteten Blechelemente (8) und der dazwischen gelegten Isolierelemente (10) möglich. Dadurch, dass die Wicklungsverschaltung in einem Aufnahmebereich (11) aufgenommen ist, welcher durch die Isolierkappe (3) und den Halter (7) begrenzt ist, lässt sich die Wicklungsverschaltung sowohl radial als auch axial sicher aufnehmen. Der Halter dient in erster Linie zur axialen Befestigung der Wicklungsverschaltung, während die Isolierkappe (3) sowohl eine axiale als auch eine radiale Aufnahme bildet. Um eine bessere Zentrierung der Blechelemente (8) zu bewirken, weisen diese Zentrierabschnitte (15) auf, die sich an einem den Aufnahmebereich (11) begrenzenden Teil abstützen. Dies kann die Isolierkappe (3) oder auch der Halter (7) sein. An der Isolierkappe (3) sollten sich die Blechelemente (8) vorzugsweise radial außen abstützen. An dem Halter (7) ist sowohl radial innen als auch radial außen eine Abstützung der Blechelemente (8) möglich. Zumindest die Zentrierelemente (15) eines Blechelements (8) sind in dem Aufnahmebereich (11), insbesondere der Isolierkappe (3) axial abgestützt. Vorzugsweise sind axiale Führungen (4, 32) an der Isolierkappe (3) vorgesehen, welche die Zentrierabschnitte (15) aufnehmen. Weiterbildungen der Erfindung werden in den Unteransprüchen näher erläutert.

Zur lagerichtigen Montage ist vorgesehen, dass von drei Zentrierabschnitten (15, 31) je Blechelement (8) ein Zentrierabschnitt (31) mit einer geringeren Breite ausgeführt ist als die Übrigen. Weiter ist vorgesehen, dass eine Führung (32) einer Vielzahl von Führungen (4, 32) schmaler ausgeführt ist als die übrigen Führungen (4). Dadurch lässt sich eine einzelne Blechlamelle (8) z. B. nur in drei von neun möglichen Winkellagen montieren. Eine Baugruppe aus drei identischen Blechlamellen (8), welche Blechlamellen jeweils um eine neuntel Winkelteilung versetzt zueinander angeordnet sind könnte dann nur in einer definierten Lage montiert werden.

In Weiterbildung der Erfindung weist die Isolierkappe (3) an axial vorspringenden Bereichen Drahtumlenkmittel (13) auf. Diese erlauben den Wicklungsdraht abschnittsweise auch als Kontakt zu nutzen und gezielt an periphere Bereiche zu führen, an denen eine Kontaktierung der Wicklung gut zugänglich und gut überprüfbar ist. Die Drahtumlenkmittel sind bevorzugt tropfenförmig ausgebildet. Hierdurch sind sie optimal an den Drahtverlauf und die Geometrie einer Wicklungsnut angepasst. Zudem weisen die Drahtumlenkmittel (13) dadurch eine höhere Festigkeit auf. Die Wicklungsdrähte können an der Isolierkappe (3) tangential geführt werden.

Weiter weist die Isolierkappe (3) Verbindungsmittel (16) zur Verbindung mit dem Halter (7) auf. Diese Verbindungsmittel (16) sind vorzugsweise an drei gleichmäßig um den Umfang der Isolierkappe (3) verteilten Stellen angeordnet. Die Verbindungsmittel (16) sind stiftartig ausgebildet und erstrecken sich axial aus der Isolierkappe (3).

Um einen axialen Spielausgleich zu ermöglichen muss der Halter (7) axial in die Isolierkappe (3) eintauchen können. Deshalb weist der Halter (7) Ausleger (17) auf, die sich radial erstrecken und an ihren Enden mit Verbindungsmitteln (16) mechanisch fixierbar sind. Der Halter weist drei um 120° winkelversetzte Ausleger auf, so dass er um 120° oder 240° verdreht montierbar ist. Der Halter (7) und die Isolierkappe (3) sind dabei so dimensioniert, dass unter allen Toleranzbedingungen ein Axialspiel zwischen den Verbindungsmitteln (16) und den Auslegern (17) besteht. Dadurch ist die Sandwichanordnung aus Isolierkappe (3), Blechelementen (8), Isolierelementen (10) und dem Halter (7) stets spielfrei. Die Ausleger (17) sind axial von einem ringförmigen Bereich (33) des Halters (7) abgesetzt.

Zweckmäßigerweise haben die Ausleger (17) jeweils entweder eine radial nach außen offene Aussparung (18) oder einen nach außen geschlossenen Durchgang. Diese korrespondieren mit den Verbindungsmitteln (16) der Isolierkappe (3). Grundsätzlich können männliche und weibliche Verbindungsmittel auch an dem jeweils anderen Bauteil vorgesehen sein. Aus montagetechnischen Gründen wird jedoch die beschriebene Lösung bevorzugt.

Es ist nämlich einfacher einen vorspringenden Zapfen oder vergleichbare Vorsprünge durch Warmverstemmen umzuformen als einen in eine Ausnehmung eingreifenden Zapfen.

Für eine möglichst einfache und zuverlässige Kontaktierung ist vorgesehen, dass zwischen Drahtumlenkmitteln (13) ein lichter Freiraum (14) im vorspringenden Bereich der Isolierkappe (3) vorhanden ist, welcher Freiraum (14) durch einen frei verlegten Wicklungsdrahtabschnitt (12) überbrückt ist. Der Freiraum (14) dient insbesondere dazu eine Schweißzange an einen Kontakthaken anzusetzen und eine Schweißverbindung zwischen einem Wicklungsdrahtabschnitt und dem Kontakthaken herzustellen.

Sinnvollerweise sind die Blechringe (8) mit solchen Kontakthaken (9) einstückig. Die Kontakthaken (9) sind so ausgerichtet, dass sie Wicklungsdrahtabschnitte (12) der Statorwicklung bei der Montage fangen, während die Blechringe (8) bei der Montage eine Axialbewegung Richtung Isolierkappe (3) ausführen.

Um eine sichere mechanische und elektrische Verbindung zwischen einem Wicklungsdrahtabschnitt und einem Kontakthaken zu erhalten, werden diese miteinander verschweißt. In Sonderfällen könnten zusätzlich auch zwei Schenkel der Kontakthaken (9) im Bereich eines Freiraums (14) miteinander verschweißt sein.

Die Blechelemente (8) können offene oder geschlossene Ringe sein, welche jeweils einen Kontaktabschnitt (20) für die Verbindung mit einer Spannungsversorgung haben. Geschlossene Blechelemente sind formstabiler, verursachen jedoch in der Regel beim Ausstanzen mehr Stanzabfall. Offene Leiterbögen können durch geschickte Anordnung platz- und damit materialsparend aus dem Blechrohling ausgestanzt werden.

Um für eine sichere elektrische Isolierung der Blechelemente (8) untereinander zu sorgen sind die Isolierelemente (10) breiter als die Blechelemente (8) ausgeführt, so dass sie radial beidseitig überstehen. Kriechstrecken werden hierdurch verlängert. Die Isolierelemente (10) können auf zwei gegenüberliegenden Flächen mit einer Klebstoffschicht beschichtet sein oder klebstofffrei sein. Je nach der gewählten Ausführung sind unterschiedliche Fertigungsschritte erforderlich. Als Klebstoff wird ein wärmeaktivierbarer Kleber bevorzugt, weil dieser eine prozesssicherere Montage erlaubt.

Wie erwähnt soll der Halter (7) so tief in den Aufnahmebereich (11) eintauchen, bis Spielfreiheit zwischen dem Halter (7), den Blechelementen (8), den Isolierelementen (10) und der Isolierkappe (3) hergestellt ist. Anschließend können die Ausleger an die Isolierkappe (3) angedrückt und in dieser Position durch Warmverstemmen fixiert werden. Dadurch bleiben die Blechelemente (8) mit den Isolierelementen (10) in Axialrichtung unter mechanischer Spannung.

Um für definierte Verhältnisse zu sorgen sind in der Isolierkappe (3) Axialanschläge (22) vorgesehen, an denen sich zumindest ein Blechelement (8) insbesondere mit seinen Zentrierabschnitten (15) axial abstützt. Die übrigen Blechelemente (8) sind im Sandwich zwischen dem ersten Blechelement (8), den Isolierelementen (10) und dem Halter (7) axial definiert untergebracht.

Weiter ist vorgesehen, dass die Zentrierabschnitte (15) in Axialführungen der Isolierkappe (3) gefügt sind. Durch die Führungen (15, 32) ist eine Verdrehsicherung und eine definierte Winkellagezuordnung gewährleistet.

Für den Kontaktierungsprozess sind an dem Halter (7) eine Mehrzahl von Rücksprüngen (23) vorgesehen. Diese sind den Kontakthaken (9) zugeordnet. Hierdurch ist die Zugänglichkeit für ein Werkzeug, insbesondere Schweißwerkzeug erleichtert.

Insbesondere weisen die Rücksprünge (23) geneigte Flächen in Richtung auf die Kontakthaken (9) auf.

Im Übrigen wird vorgeschlagen, dass die Schweißstellen mehrerer, vorzugsweise aller Kontakthaken einer Phase axial an der gleichen axialen Position angeordnet sind. Dies vereinfacht den Montageprozess und die hierfür notwendigen Werkzeuge. Die Wicklungsdrahtabschnitte (12) unterschiedlicher Phasen sind an die unterschiedlichen Axiallagen der Blechelemente (8) angepasst. Dies erleichtert die Verwendung von Gleichteilen für die Blechelemente (8).

Der Halter weist in einer Weiterbildung der Erfindung einen Innenwulst (28) an seiner Innenseite auf. Dadurch sind die Blechelemente (8) und die Isolierelemente (10) besser geschützt vor Verunreinigungen und Beschädigungen. Die Innenwulst (28) ist vorzugsweise als Ringwand ausgebildet. Kriechströme werden hierdurch minimiert (DIN EN 60335-1). Bei einer Vormontage kann die Innenwulst (28) die Blechelemente (8) und die Isolierelemente (10) vorzentrieren.

Ein Vorteil der Erfindung besteht auch darin, dass viele Gleichteile verwendet werden. Die Blechelemente (8) sind demnach identisch ausgebildet. Gleiches gilt für die Isolierelemente (10).

Eine zweite Lösung der Aufgabe ist durch die Verfahrensmerkmale der Ansprüche 25 und 26 gegeben. Bei einem ersten Verfahren werden folgende Verfahrensschritte ausgeführt: a) Bereitstellen des mit der Isolierkappe (3) und einer Wicklung versehenen Statorkerns, wobei am Umfang der Isolierkappe (3) Freiräume (14) überbrückende Wicklungsdrahtabschnitte (12) angeordnet sind, b) Bereitstellen von Blechelementen (8), Isolierelementen (10) und einem Halter (7), c) abwechselndes Einlegen von Blechelementen (8) und mit warmaushärtendem Klebstoff beschichteten Isolierelementen (10) in eine Vorrichtung, d) zusammendrücken, erwärmen und verkleben des dadurch gebildeten Stapels, wodurch eine Verschaltungsbaugruppe hergestellt wird, e) Fügen der Verschaltungsbaugruppe und eines Halters (7) auf die Isolierkappe (3), f) Andrücken des Halters an die Isolierkappe (3), f) Umformen von Verbindungsmitteln (16) unter Bildung einer mechanischen Verbindung zwischen der Isolierkappe (3) und dem Halter (7), g) Herstellung jeweils eines elektrischen Kontakts zwischen Kontakthaken (9) und den zugeordneten Wicklungsdrahtabschnitten (12).

Eine Alternative zu diesem Verfahren wird jedoch bevorzugt, bei welcher eine Vormontage einiger Bauteile zu einer kompakten Baugruppe wie folgt stattfindet: a) Bereitstellen des mit der Isolierkappe (3) und einer Wicklung versehenen Statorkerns, wobei am Umfang der Isolierkappe (3) Freiräume (14) überbrückende Wicklungsdrahtabschnitte (12) angeordnet sind, b) Bereitstellen der Blechelemente (8), der Isolierelemente (10) und eines Halters (7), c) abwechselndes Einlegen von Blechelementen (8) und Isolierelementen (10) in den Halter (7), wobei Nietzapfen des Halters (7) in Durchgangslöchern der Blechelemente (8) und der Isolierelemente (10) eingefügt werden, d) Warmverstemmen der Nietzapfen unter Bildung einer Baugruppe als Wicklungsverschaltung (5), e) axiales Montieren der Baugruppe auf den Stator, insbesondere auf die Isolierkappe (3), wobei Aussparungen (18) oder Durchgänge (19) des Halters (7) mit Verbindungsmitteln (16) der Isolierkappe (3) gefügt werden, f) Herstellung einer formschlüssigen Verbindung zwischen den Aussparungen (18) oder Durchgängen (19) des Halters (7) mit Verbindungsmitteln (16) der Isolierkappe (3) durch Warmverstemmen der Verbindungsmittel (16), g) Herstellung jeweils eines elektrischen Kontakts zwischen Kontakthaken (9) und den zugeordneten Wicklungsdrahtabschnitten (12).

Für die Herstellung des elektrischen Kontakts zwischen den Kontakthaken (9) und den Wickeldrahtabschnitten (12) wird eine Schweißverbindung bevorzugt. Insbesondere eignen sich hierfür Widerstandsschweißen oder Laserschweißen. Durch den Halter werden die Schweißstellen und auch die angeschweißten Wickeldrahtabschnitte im Betrieb nicht mehr belastet und Schwingungen minimiert. Kabelbruch oder Aufbrechen der Schweißstellen wird auf diese Weise verhindert.

Ausführungsbeispiele der Erfindung werden nachfolgend anhand der Zeichnung näher erläutert. Es zeigen:
Fig. 1 eine Explosionszeichnung einer Wicklungsverschaltung eines Stators,
Fig. 2 eine montierte Wicklungsverschaltung
Fig. 3 eine Wicklungsverschaltung als Vormontagebaugruppe und
Fig. 4 eine auf einem Stator montierte Vormontagebaugruppe.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

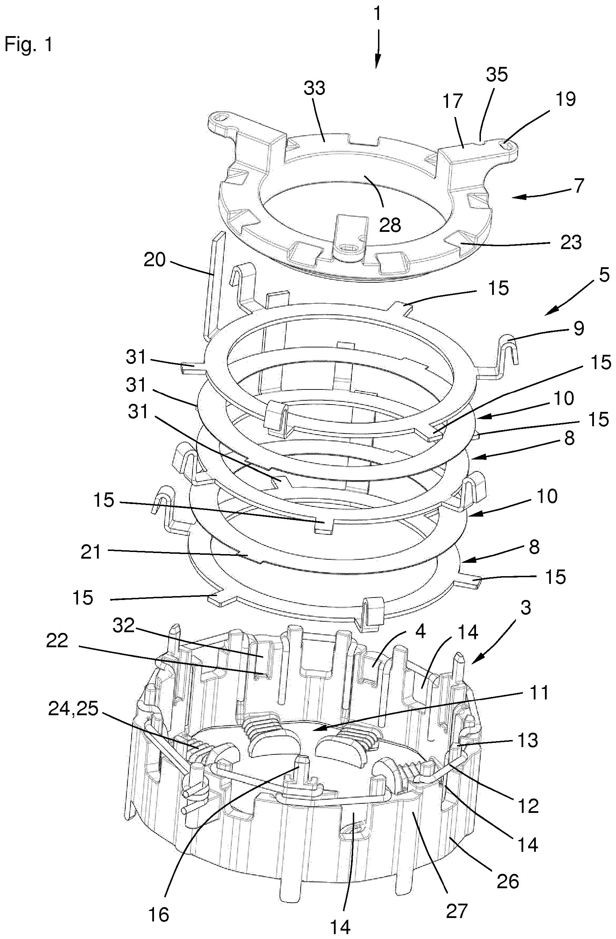

Fig. 1 zeigt eine Explosionszeichnung eines Teilstators 1 eines Elektromotors, mit einer Wicklungsverschaltung 5 einer Isolierkappe 3, drei Blechelementen 8, zwei Isolierelementen 10 und einem Halter 7. Die Isolierkappe 3 ist in erster Näherung aus einem rohrförmigen und einen ringscheibenförmigen Bereich 24 zusammengesetzt, wobei der ringscheibenförmige Bereich aus mehreren sich radial nach innen erstreckenden Polabdeckungen 25 besteht, welche radial außen in den rohrförmigen Bereich 26 übergehen. Der rohrförmige Bereich 26 der Isolierkappe 3 besteht aus einem ersten um den vollen Umfang geschlossenen Rohrabschnitt und einem axial anschließenden mehrfach radial durchbrochenen Rohrabschnitt 27, aus welchem Drahtumlenkmittel 13 axial vorspringen. Um die Drahtumlenkmittel 13 sind Wicklungsdrahtabschnitte 12 verlegt; diese überbrücken Freiräume 14 zwischen den durchbrochenen Rohrabschnitten 27. Im Übergangsbereich zwischen dem rohrförmigen Bereich 26 und dem durchbrochenen Rohrabschnitt 27 sind Axialanschläge 22 in Form eines Wanddickensprungs mitgeformt. An die Axialanschläge schließt radial ein Wandungsbereich des durchbrochenen Rohrabschnitts 27 an, so dass sich ein darin einzulegendes Blechelement 8 mittels Zentrierabschnitten 15, 31, welche sich von den Blechelementen 8 radial nach außen erstrecken radial und axial abstützen können. Hier sind drei Zentrierabschnitte 15, 31 je Blechelement 8 vorgesehen, wobei ein schmaler Zentrierabschnitt 31 und zwei breitere Zentrierabschnitte 15 vorgesehen. Die Zentrierabschnitte 15, 31 passen in Führungen 4, 32, wobei eine Führung 32 schmaler als die übrigen Führungen 4 ist um eine eindeutige Winkellagezuordnung sicherzustellen. Weiter erstrecken sich drei Kontakthaken 9 je Blechelement 8 zunächst radial nach außen und dann in einer U-bis V-förmig Kurve in Axialrichtung von der Isolierkappe 3 weg und anschließend zurück Richtung Isolierkappe 3. Die Kontakthaken 9 sind für eine Schweißverbindung mit je einem Wicklungsdrahtabschnitt 12 ausgelegt. Zusätzlich ist jedes Blechelement 8 mit einem Kontaktabschnitt 20 versehen, welches abgewinkelt radial von der Isolierkappe 3 weg gerichtet ist. Die Kontaktabschnitte 20 der drei Blechelemente 8 sind winkelversetzt angeordnet und parallel zueinander ausgerichtet. Die Blechelemente 8 sind im gezeigten Beispiel als geschlossener Ring ausgeführt. Ebenfalls geschlossene Ringe bilden die Isolierelemente 10, die zwischen den Blechelementen 8 angeordnet sind. Die Isolierelemente 10 weisen Trennvorsprünge 21 auf, welche sich radial nach außen erstrecken (ohne Funktion). Die Isolierelemente 10 müssen unter allen Toleranzverhältnissen stets eine sichere elektrische Trennung der Blechelemente 8 aufrechterhalten, deshalb sind die Isolierelemente 10 breiter ausgebildet als die zu isolierenden Blechelemente 8. Der Halter 7 besteht aus einem ringförmigen Bereich 33 an welchen sich radial und axial drei Ausleger 17 anschließen. Am ringförmigen Bereich 33 des Halters 7 sind im Kantenbereich Rücksprünge 23 eingeformt, welche gleichmäßig um den Umfang verteilt sind. Jedem Kontakthaken 9 ist ein Rücksprung 23 zugeordnet. Im radialen Endbereich der Ausleger 17 ist ein Durchgang 19 vorgesehen, welcher mit axial vorspringenden Verbindungsmitteln 16 der Isolierkappe 3 korrespondieren. Die Verbindungsmittel 16 sind zapfenartig ausgebildet und passen in die Durchgänge 19. Ein geringes Spiel kann die Montage vereinfachen, es kann dann durch Warmverstemmen der Verbindungsmittel 16 kompensiert werden. An den Auslegern 17 ist weiter eine axial ausgerichtete Auskehlung 35 vorgesehen, welche als Freisparung für die Kontaktabschnitte 20 dient. Im gezeigten Beispiel ist nur an einem Ausleger 17 eine derartige Auskehlung 35 notwendig. Aus Symmetriegründen sind dennoch alle Ausleger 17 mit einer Auskehlung 35 versehen.

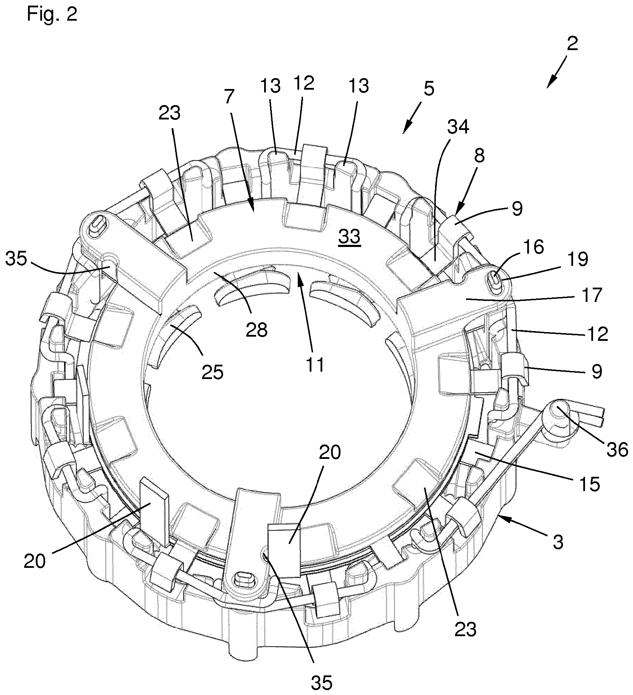

Fig. 2 zeigt die Wicklungsverschaltungsbaugruppe 2 im montierten Zustand, mit der Isolierkappe 3, dem Halter 7, Blechelementen 8 und Wicklungsdrahtabschnitten 12. Die Verbindungsmittel 16 greifen in die in den Auslegern 17 eingeformten Durchgänge 19 ein. Die Verbindungsmittel 16 sind hier aber noch nicht umgeformt, um eine feste Verbindung zu erreichen. Kontakthaken 9 der Blechelemente 8 umgreifen einzelne Wicklungsdrahtabschnitte 12. Freiräume 14 dienen als Aufnahmeraum für die Kontakthaken 9, welche durch je einen radialen Auslegerarm 34 mit dem zugehörigen Blechelement 8 einstückig sind. Um den Zugang für eine Schweißzange oder andere Werkzeuge zu erleichtern, sind die Rücksprünge 23, welche in Richtung auf die Kontakthaken 9 geneigt sind, vorgesehen. Vorzugsweise erfolgt eine Schweißverbindung zwischen den Kontakthaken 9 und den Wicklungsdrahtabschnitten 12. In Fig. 2 ist der Schweißvorgang noch nicht erfolgt. Weiter sind Polabdeckungen 25 und Kontaktabschnitte 20 der Blechelemente 8 zu erkennen. Die Isolierkappe 3 und der Halter 7 bilden einen Aufnahmebereich 11, in welchem die Blechelemente 8 und die Isolierelemente (verdeckt) axial und radial spielfrei aufgenommen sind. Am Halter 7 ist der ringförmige Bereich 33, der die Ausleger 17 miteinander verbindet und an seinem radial inneren Bereich der Innenwulst 28 zu erkennen, durch welchen die Blechelemente 8 und die Isolierelemente (verdeckt) geschützt sind. Im unteren Bereich der Fig. 2 ist die Auskehlung 35 im Zusammenspiel mit einem Kontaktabschnitt 20 dargestellt. Hier ist ersichtlich weshalb die Auskehlung 35 bei der gezeigten Geometrie notwendig ist, um identische Blechelemente 8 verwenden zu können. Schließlich ist ein Hilfszapfen 36 dargestellt, der nach der Montage wieder entfernt wird. Er dient zur temporären Befestigung des Wicklungsdrahtes während der Montage, insbesondere des Wicklungsanfangs und Wicklungsendes.

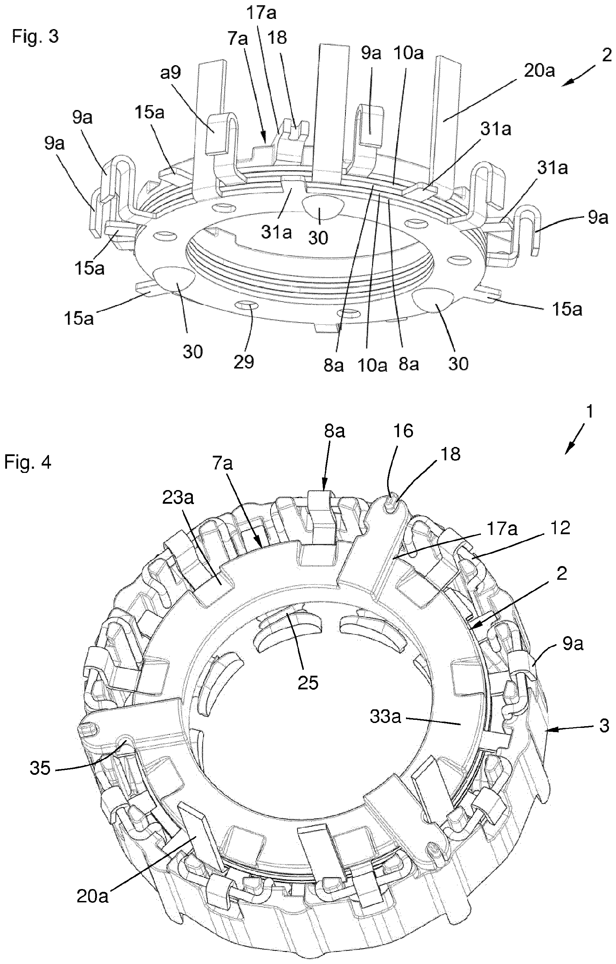

Fig. 3 zeigt eine vormontierte Wicklungsverschaltungsbaugruppe 2 mit einer Variante eines Halters 7a, einer Variante von Blechelementen 8a, und von Isolierelementen 10a. Die Blechelemente 8a und die Isolierelemente 10a weisen Durchgangslöcher 29 und der Halter 7a Nietzapfen auf. Die Nietzapfen erstrecken sich durch die Durchgangslöcher 29 und darüber hinaus und enden in Form eines Nietkopfs 30. Die Nietköpfe 30 sind durch Warmumformen hergestellt. Die Blechelemente 8a und die Isolierelemente 10a sind einander verklebt und spielfrei fixiert. Der Kleber ist warm aktivierbar. Der Halter 7a weist drei Nietzapfen auf. Weil die Blechelemente 8a und die Isolierelemente 10a identisch aber zueinander winkelversetzt angeordnet sind, haben diese neun Durchgangslöcher 29. Die Ausleger 17a weisen im Gegensatz zur Ausführung gemäß Fig. 1 und Fig. 2 radial offene Aussparungen 18 auf. Die Ausleger 17a springen in Axialrichtung weniger weit aus dem Halter 7a vor als die vorher beschriebene Ausführungsform. Weiter sind je Blechelement 8a drei Kontakthaken 9a, je zwei breite Zentrierabschnitte 15a, je ein schmaler Zentrierabschnitt 31a und ein Kontaktabschnitt 20a vorhanden. Der Halter 7a weist bei dieser Ausführung keinen Innenwulst auf, weil die Blechelemente 8a und die Isolierelemente 10a über die Nietzapfen ausgerichtet sind.

Fig. 4 zeigt die Wicklungsverschaltungsbaugruppe 2 aus Fig. 2 im montierten Zustand, mit der Isolierkappe 3, dem Halter 7a, den Blechelementen 8a und den Wicklungsdrahtabschnitten 12. An den radialen Enden der Ausleger 17a des Halters 7a, sind die radial offene Aussparungen 18 eingeformt, die mit den Verbindungsmitteln 16 zusammenwirken. Weiter sind gezeigt, die Auskehlung 35, der Kontaktabschnitt 201, die Kontakthaken 9a, der ringförmige Bereich 33a und die Rücksprünge 23a am Halter 7a und Polabdeckungen 25 als Bestandteil der Isolierkappe 3.

### Bezugszeichenliste

- 1: Teilstator
- 2: Wicklungsverschaltungsbaugruppe
- 3: Isolierkappe
- 4: breite Führung
- 5: Wicklungsverschaltung
- 6: Isolierung
- 7: Halter
- 8: Blechelement
- 9: Kontakthaken
- 10: Isolierelement
- 11: Aufnahmebereich
- 12: Wicklungsdrahtabschnitt
- 13: Drahtumlenkmittel
- 14: Freiraum
- 15: breiter Zentrierabschnitt
- 16: Verbindungsmittel
- 17: Ausleger
- 18: Aussparung
- 19: Durchgang
- 20: Kontaktabschnitt
- 21: Trennvorsprung
- 22: Axialanschlag
- 23: Rücksprung
- 24: ringscheibenförmiger Bereich
- 25: Polabdeckung
- 26: rohrförmiger Bereich
- 27: durchbrochener Rohrabschnitt
- 28: Innenwulst
- 29: Durchgangsloch
- 30: Nietkopf
- 31: schmaler Zentrierabschnitt
- 32: schmale Führung
- 33: ringförmiger Bereich
- 34: Auslegerarm
- 35: Auskehlung
- 36: Hilfszapfen

## Patentansprüche

1. Stator eines elektronisch kommutierten Gleichstrommotors, mit einem Statorkern, einer Isolierkappe (3), einer Statorwicklung und einer Wicklungsverschaltung (5), wobei die Wicklungsverschaltung (5) aus mehreren Blechelementen (8) und mehreren Isolierelementen (10) besteht, welche zwischen den Blechelementen (8) angeordnet sind, wobei die Blechelemente (8) und die Isolierelemente (10) durch einen Halter (7) an der Isolierkappe (3) fixiert sind, und wobei die Wicklungsverschaltung (5) in einem Aufnahmebereich (11) aufgenommen ist, welcher durch die Isolierkappe (3) und den Halter (7) begrenzt ist **dadurch gekennzeichnet, dass** die Blechelemente (8) Zentrierabschnitte (15) aufweisen, die an einem den Aufnahmebereich (11) begrenzenden Bauteil radial geführt sind und dass zumindest die Zentrierabschnitte (15) eines Blechelements (8) im Aufnahmebereich (11), insbesondere der Isolierkappe (3), axial abgestützt sind.

2. Stator nach Anspruch 1, **dadurch gekennzeichnet, dass** drei Zentrierabschnitte (15) vorgesehen sind und einer der Zentrierabschnitte (15) eine geringere Breite aufweist als die Übrigen.

3. Stator nach Anspruch 2, **dadurch gekennzeichnet, dass** eine Führung (32) zur Aufnahme von Zentrierabschnitten (15, 31) schmaler ausgebildet ist als die übrigen Führungen (4).

4. Stator nach Anspruch 1, 2 oder 3, **dadurch gekennzeichnet, dass** die Isolierkappe (3) axial vorspringende Bereiche mit Drahtumlenkmitteln (13) aufweist.

5. Stator nach Anspruch 1, 2, 3 oder 4, **dadurch gekennzeichnet, dass** die Isolierkappe (3) Verbindungsmittel (16) zur mechanischen Verbindung mit dem Halter (7) aufweist.

6. Stator nach Anspruch 5, **dadurch gekennzeichnet, dass** der Halter (7) sich radial erstreckende Ausleger (17) aufweist, die mit den Verbindungsmitteln (16) mechanisch verbunden sind.

7. Stator nach Anspruch 6, **dadurch gekennzeichnet, dass** ein Ausleger (17) eine radial nach außen offene Aussparung (18) oder einen nach außen geschlossenen Durchgang (19) hat.

8. Stator nach Anspruch 6 oder 7, **dadurch gekennzeichnet, dass** die Verbindung zwischen den Verbindungsmitteln (16) und den Auslegern (17) durch Warmverstemmen hergestellt ist.

9. Stator nach zumindest einem der Ansprüche 4 bis 8, **dadurch gekennzeichnet, dass** zwischen Drahtumlenkmitteln (13) ein lichter Freiraum (14) im vorspringenden Bereich der Isolierkappe (3) vorhanden ist, welcher Freiraum (14) durch einen frei verlegten Wicklungsdrahtabschnitt (12) überbrückt ist.

10. Stator nach Anspruch 1, **dadurch gekennzeichnet, dass** die Blechelemente (8) Kontakthaken (9) aufweisen, welche Wicklungsdrahtabschnitte (12) der Statorwicklung bei der Montage während einer Axialbewegung Richtung Isolierkappe (3) fangen.

11. Stator nach Anspruch 10, **dadurch gekennzeichnet, dass** zumindest ein Kontakthaken (9) mit einem Wicklungsdrahtabschnitt (12) verschweißt ist.

12. Stator nach zumindest einem der vorangehenden Ansprüche, **dadurch gekennzeichnet, dass** die Blechelemente (8) offene oder geschlossene Ringe sind, welche jeweils einen Kontaktabschnitt (20) für die Verbindung mit einer Spannungsversorgung haben.

13. Stator nach zumindest einem der vorangehenden Ansprüche, **dadurch gekennzeichnet, dass** die Isolierelemente (10) über die Blechelemente (8) radial nach innen und außen überstehen.

14. Stator nach zumindest einem der vorangehenden Ansprüche, **dadurch gekennzeichnet, dass** die Isolierelemente (10) auf zwei gegenüberliegenden Flächen mit einer Klebstoffschicht beschichtet sind oder dass die Isolierelemente (10) klebstofffrei sind.

15. Stator nach zumindest einem der vorangehenden Ansprüche, **dadurch gekennzeichnet, dass** der Halter (7) so tief in den Aufnahmebereich (11) eintaucht, bis Spielfreiheit zwischen dem Halter (7), den Blechelementen (8), den Isolierelementen (10) und der Isolierkappe (3) hergestellt ist.

16. Stator nach zumindest einem der vorangehenden Ansprüche, **dadurch gekennzeichnet, dass** in der Isolierkappe (3) Axialanschläge (22) vorgesehen sind, an denen sich zumindest ein Blechelement (8) insbesondere mit seinen Zentrierabschnitten (15) axial abstützt.

17. Stator nach Anspruch 10 oder 16, **dadurch gekennzeichnet, dass** die Zentrierabschnitte (15) in Axialführungen der Isolierkappe (3) gefügt sind.

18. Stator nach zumindest einem der vorangehenden Ansprüche, **dadurch gekennzeichnet, dass** der Halter (7) eine Mehrzahl von Rücksprüngen (23) aufweist, die den Kontakthaken (9) zugeordnet sind.

19. Stator nach Anspruch 18, **dadurch gekennzeichnet, dass** die Rücksprünge (23) in Richtung auf die Kontakthaken (9) geneigte Flächen aufweisen.

20. Stator nach zumindest einem der Ansprüche 8 bis 19, **dadurch gekennzeichnet, dass** die Schweißstellen mehrerer, vorzugsweise aller Kontakthaken einer Phase axial an der gleichen axialen Position angeordnet sind.

21. Stator nach zumindest einem der vorangehenden Ansprüche, **dadurch gekennzeichnet, dass** der Halter an seiner Innenseite einen Innenwulst (28) aufweist.

22. Stator nach zumindest einem der vorangehenden Ansprüche, **dadurch gekennzeichnet, dass** die Blechelemente (8) identisch ausgebildet sind.

23. Verfahren zur Herstellung eines Stators nach Anspruch 1, **gekennzeichnet durch** folgende Verfahrensschritte: a) Bereitstellen des mit der Isolierkappe (3) und einer Wicklung versehenen Statorkerns, wobei am Umfang der Isolierkappe (3) Freiräume (14) überbrückende Wicklungsdrahtabschnitte (12) angeordnet sind, b) Bereitstellen von Blechelementen (8), Isolierelementen (10) und einem Halter (7), c) abwechselndes Einlegen von Blechelementen (8) und mit warmaushärtendem Klebstoff beschichteten Isolierelementen (10) in eine Vorrichtung, d) zusammendrücken, erwärmen und verkleben des dadurch gebildeten Stapels, wodurch eine Verschaltungsbaugruppe hergestellt wird, e) Fügen der Verschaltungsbaugruppe und eines Halters (7) auf die Isolierkappe (3), f) Andrücken des Halters an die Isolierkappe (3), f) Umformen von Verbindungsmitteln (16) unter Bildung einer mechanischen Verbindung zwischen der Isolierkappe (3) und dem Halter (7), g) Herstellung jeweils eines elektrischen Kontakts zwischen Kontakthaken (9) und den zugeordneten Wicklungsdrahtabschnitten (12).

24. Verfahren zur Herstellung eines Stators nach Anspruch 1, **gekennzeichnet durch** folgende Verfahrensschritte: a) Bereitstellen des mit der Isolierkappe (3) und einer Wicklung versehenen Statorkerns, wobei am Umfang der Isolierkappe (3) Freiräume (14) überbrückende Wicklungsdrahtabschnitte (12) angeordnet sind, b) Bereitstellen der Blechelemente (8), der Isolierelemente (10) und eines Halters (7), c) abwechselndes Einlegen von Blechelementen (8) und Isolierelementen (10) in den Halter (7), wobei Nietzapfen des Halters (7) in Durchgangslöchern der Blechelemente (8) und der Isolierelemente (10) eingefügt werden, d) Warmverstemmen der Nietzapfen unter Bildung einer Baugruppe als Wicklungsverschaltung (5), e) axiales Montieren der Baugruppe auf den Stator, insbesondere auf die Isolierkappe (3), wobei Aussparungen (18) oder Durchgänge (19) des Halters (7) mit Verbindungsmitteln (16) der Isolierkappe (3) gefügt werden, f) Herstellung einer formschlüssigen Verbindung zwischen den Aussparungen (18) oder Durchgängen (19) des Halters (7) mit Verbindungsmitteln (16) der Isolierkappe (3) durch Warmverstemmen der Verbindungsmittel (16), g) Herstellung jeweils eines elektrischen Kontakts zwischen Kontakthaken (9) und den zugeordneten Wicklungsdrahtabschnitten (12).

25. Verfahren nach Anspruch 23 oder 24, **dadurch gekennzeichnet, dass** die elektrische Verbindung zwischen den Kontakthaken (9) und den Wickeldrahtabschnitten (12) durch eine Schweißverbindung hergestellt ist, insbesondere durch Widerstandsschweißen oder Laserschweißen.

## Claims

1. A stator of an electronically commutated direct-current motor, having a stator core, an insulating cap (3), a stator winding and a winding interconnection (5), wherein the winding interconnection (5) consists of a plurality of sheet metal elements (8) and a plurality of insulating elements (10) which are arranged between the sheet metal elements (8), wherein the sheet metal elements (8) and the insulating elements (10) are fixed on the insulating cap (3) by a holder (7), and wherein the winding interconnection (5) is received in a receiving region (11) bounded by the insulating cap (3) and the holder (7), **characterised in that** the sheet metal elements (8) have centering portions (15) radially guided on a component part bounding the receiving region (11) and **in that** at least the centering portions (15) of one sheet metal element (8) are axially supported in the receiving region (11), in particular the insulating cap (3).

2. A stator according to claim 1, **characterised in that** three centering portions (15) are provided and one of the centering portions (15) has a smaller width than the rest.

3. A stator according to claim 2, **characterised in that** a guide (32) for receiving centering portions (15, 31) is narrower than the rest of the guides (4).

4. A stator according to claim 1, 2 or 3, **characterised in that** the insulating cap (3) has axially projecting regions with wire deflection means (13).

5. A stator according to claim 1, 2, 3 or 4, **characterised in that** the insulating cap (3) has connecting means (16) for mechanical connection to the holder (7).

6. A stator according to claim 5, **characterised in that** the holder (7) has radially extending arms (17) which are mechanically connected to the connecting means (16).

7. A stator according to claim 6, **characterised in that** an arm (17) has a radially outwards open cutout (18) or an outwardly closed passage (19).

8. A stator according to claim 6 or 7, **characterised in that** the connection between the connecting means (16) and the arms (17) is produced by warm caulking.

9. A stator according to at least one of claims 4 to 8, **characterised in that** between wire deflection means (13) there is a clear free space (14) present in the projecting region of the insulating cap (3), which free space (14) is spanned by a freely laid winding wire portion (12).

10. A stator according to claim 1, **characterised in that** the sheet metal elements (8) have contact hooks (9) which catch winding wire portions (12) of the stator winding upon mounting, during an axial motion in the direction of the insulating cap (3).

11. A stator according to claim 10, **characterised in that** at least one contact hook (9) is welded to a winding wire portion (12).

12. A stator according to at least one of the preceding claims, **characterised in that** the sheet metal elements (8) are open or closed rings which each have a contact portion (20) for the connection to a power supply.

13. A stator according to at least one of the preceding claims, **characterised in that** the insulating elements (10) project radially inwards and outwards beyond the sheet metal elements (8).

14. A stator according to at least one of the preceding claims, **characterised in that** the insulating elements (10) are coated with an adhesive layer on two opposite surfaces or **in that** the insulating elements (10) are adhesive-free.

15. A stator according to at least one of the preceding claims, **characterised in that** the holder (7) extends into the receiving region (11) to a depth that zero backlash is produced between the holder (7), the sheet metal elements (8), the insulating elements (10) and the insulating cap (3).

16. A stator according to at least one of the preceding claims, **characterised in that** axial stops (22) are provided in the insulating cap (3), on which at least one sheet metal element (8) is axially supported, in particular with its centering portions (15).

17. A stator according to claim 10 or 16, **characterised in that** the centering portions (15) are inserted in axial guides of the insulating cap (3).

18. A stator according to at least one of the preceding claims, **characterised in that** the holder (7) has a plurality of recesses (23) which are associated with the contact hooks (9).

19. A stator according to claim 18, **characterised in that** the recesses (23) have surfaces inclined towards the contact hooks (9).

20. A stator according to at least one of claims 8 to 19, **characterised in that** axially the welding sites of a plurality of contact hooks, preferably all contact hooks, of a phase are arranged at the same axial position.

21. A stator according to at least one of the preceding claims, **characterised in that** the holder has an inner bead (28) at its inner side.

22. A stator according to at least one of the preceding claims, **characterised in that** the sheet metal elements (8) are identical in design.

23. A method of manufacturing a stator according to claim 1, **characterised by** the following method steps: a) provision of the stator core provided with the insulating cap (3) and a winding, wherein winding wire portions (12) spanning free spaces (14) are arranged at the circumference of the insulating cap (3), b) provision of sheet metal elements (8), insulating elements (10) and a holder (7), c) alternating insertion of sheet metal elements (8) and insulating elements (10), coated with thermosetting adhesive, into a device, d) compression, heating and gluing together of the stack thus produced, whereby an interconnection assembly is produced, e) assembly of the interconnection assembly and a holder (7) onto the insulating cap (3), f) pressing of the holder onto the insulating cap (3), f) deformation of connecting means (16) accompanied by the formation of a mechanical connection between the insulating cap (3) and the holder (7), g) manufacture in each case of an electrical contact between contact hooks (9) and the associated winding wire portions (12).

24. A method of manufacturing a stator according to claim 1, **characterised by** the following method steps: a) provision of the stator core provided with the insulating cap (3) and a winding, wherein winding wire portions (12) spanning free spaces (14) are arranged at the circumference of the insulating cap (3), b) provision of the sheet metal elements (8), the insulating elements (10) and a holder (7), c) alternating insertion of sheet metal elements (8) and insulating elements (10) in the holder (7), wherein rivet pins of the holder (7) are inserted in through holes of the sheet metal elements (8) and of the insulating elements (10), d) warm caulking of the rivet pins accompanied by the formation of an assembly as a winding interconnection (5), e) axial mounting of the assembly onto the stator, in particular onto the insulating cap (3), wherein cut-outs (18) or through passages (19) of the holder (7) are assembled with connecting means (16) of the insulating cap (3), f) manufacture of a form-locked connection between the cut-outs (18) or through passages (19) of the holder (7) to connecting means (16) of the insulating cap (3) through warm caulking of the connecting means (16), g) manufacture in each case of an electrical contact between contact hooks (9) and the associated winding wire portions (12).

25. A method according to claim 23 or 24, **characterised in that** the electrical connection between the contact hooks (9) and the winding wire portions (12) is produced by a weld connection, in particular by resistance welding or laser welding.

## Revendications

1. Stator d'un moteur à courant continu à commutation électronique, avec un noyau de stator, un capot isolant (3), un enroulement de stator et un câblage d'enroulement (5), où le câblage d'enroulement (5) consiste en plusieurs éléments en tôle (8) et plusieurs éléments isolants (10), qui sont disposés entre les éléments en tôle (8), où les éléments en tôle (8) et les éléments isolants (10) sont fixés au capot isolant (3) par un support (7), et où le câblage d'enroulement (5) est reçu dans un domaine de réception (11) qui est limité par le capot isolant (3) et le support (7), **caractérisé en ce que** les éléments en tôle (8) présentent des segments de centrage (15) qui sont guidés radialement sur un élément constitutif limitant le domaine de réception (11) et **en ce qu'**au moins les segments de centrage (15) d'un élément en tôle (8) sont supportés axialement dans le domaine de réception (11), en particulier le capot isolant (3).

2. Stator selon la revendication 1, **caractérisé en ce que** trois segments de centrage (15) sont prévus et l'un des segments de centrage (15) présente une largeur plus petite que les autres.

3. Stator selon la revendication 2, **caractérisé en ce qu'**un guide (32) destiné à recevoir des segments de centrage (15, 31) est plus étroit que les autres guides (4).

4. Stator selon la revendication 1, 2 ou 3, **caractérisé en ce que** le capot isolant (3) comporte des domaines en saillie axialement avec des moyens de déviation de fil (13).

5. Stator selon la revendication 1, 2, 3 ou 4, **caractérisé en ce que** le capot isolant (3) comporte des moyens de liaison (16) pour une liaison mécanique avec le support (7).

6. Stator selon la revendication 5, **caractérisé en ce que** le support (7) comporte des bras s'étendant radialement (17) qui sont reliés mécaniquement aux moyens de liaison (16).

7. Stator selon la revendication 6, **caractérisé en ce qu'**un bras (17) a un évidement (18) ouvert radialement vers l'extérieur ou un passage (19) fermé vers l'extérieur.

8. Stator selon la revendication 6 ou 7, **caractérisé en ce que** la liaison entre les moyens de liaison (16) et les bras (17) est réalisée par matage à chaud.

9. Stator selon au moins l'une des revendications 4 à 8, **caractérisé en ce qu'**entre les moyens de déviation de fil (13) il y a un espace libre (14) dans la domaine en saillie du capot isolant (3), lequel espace (14) est comblé par un segment de fil d'enroulement (12) posé librement.

10. Stator selon la revendication 1, **caractérisé en ce que** les éléments en tôle (8) comportent des crochets de contact (9) qui saisissent des segments de fil d'enroulement (12) de l'enroulement du stator lors du montage pendant un mouvement axial vers le capot isolant (3).

11. Stator selon la revendication 10, **caractérisé en ce qu'**au moins un crochet de contact (9) est soudé à un segment de fil d'enroulement (12).

12. Stator selon au moins l'une des revendications précédentes, **caractérisé en ce que** les éléments en tôle (8) sont des anneaux ouverts ou fermés, dont chacun a un segment de contact (20) pour la liaison à une alimentation en tension.

13. Stator selon au moins l'une des revendications précédentes, **caractérisé en ce que** les éléments isolants (10) font saillie radialement vers l'intérieur et vers l'extérieur au-dessus des éléments en tôle (8).

14. Stator selon au moins l'une des revendications précédentes, **caractérisé en ce que** les éléments isolants (10) sont revêtus d'une couche d'adhésif sur deux surfaces opposées ou **en ce que** les éléments isolants (10) sont sans adhésif.

15. Stator selon au moins l'une des revendications précédentes, **caractérisé en ce que** le support (7) plonge dans le domaine de réception (11) à une profondeur telle qu'une absence de jeu entre le support (7), les éléments en tôle (8), les éléments isolants (10) et le capot isolant (3) est réalisée.

16. Stator selon au moins l'une des revendications précédentes, **caractérisé en ce que** des butées axiales (22) sont prévues dans le capot isolant (3), sur lesquelles au moins un élément en tôle (8) est supporté axialement, en particulier avec ses segments de centrage (15).

17. Stator selon la revendication 10 ou 16, **caractérisé en ce que** les segments de centrage (15) sont joints dans des guides axiaux du capot isolant (3).

18. Stator selon au moins l'une des revendications précédentes, **caractérisé en ce que** le support (7) comporte une pluralité d'évidements (23) qui sont associés aux crochets de contact (9).

19. Stator selon la revendication 18, **caractérisé en ce que** les évidements (23) présentent des surfaces inclinées en direction des crochets de contact (9).

20. Stator selon au moins l'une des revendications 8 à 19, **caractérisé en ce que** les points de soudage de plusieurs, de préférence de tous les crochets de contact d'une phase sont disposés axialement à la même position axiale.

21. Stator selon au moins l'une des revendications précédentes, **caractérisé en ce que** le support comporte un renflement interne (28) sur son côté interne.

22. Stator selon au moins l'une des revendications précédentes, **caractérisé en ce que** les éléments en tôle (8) sont conçus de manière identique.

23. Procédé de fabrication d'un stator selon la revendication 1, **caractérisé par** les étapes de procédé suivantes: a) fourniture du noyau de stator muni du capot isolant (3) et d'un enroulement, où sur la circonférence du capot isolant (3) sont disposés des segments de fil d'enroulement (12) comblant des espaces libres (14), b) fourniture d'éléments en tôle (8), d'éléments isolants (10) et d'un support (7), c) insertion alternée d'éléments en tôle (8) et d'éléments isolants (10) revêtus d'un adhésif thermodurcissable en un dispositif, d) compression, chauffage et collage de l'empilement ainsi formé, de sorte qu'un module de câblage est produit, e) jonction du module de câblage et d'un support (7) sur le capot isolant (3), f) pressage du support sur le capot isolant (3), f) formage de moyens de liaison (16) avec formation d'une liaison mécanique entre le capot isolant (3) et le support (7), g) établissement d'un contact électrique entre chacun des crochets de contact (9) et des segments de fil d'enroulement (12) associés.

24. Procédé de fabrication d'un stator selon la revendication 1, **caractérisé par** les étapes de procédé suivantes: a) fourniture du noyau de stator muni du capot isolant (3) et d'un enroulement, où sur la circonférence du capot isolant (3) sont agencés des segments de fil d'enroulement (12) comblant des espaces libres (14), b) fourniture des éléments en tôle (8), des éléments isolants (10) et d'un support (7), c) insertion alternée d'éléments en tôle (8) et d'éléments isolants (10) dans le support (7), où des tiges de rivets du support (7) sont insérées dans des trous traversants des éléments en tôle (8) et des éléments isolants (10), d) matage à chaud des tiges de rivets avec formation d'un module sous forme de câblage d'enroulement (5), e) montage axial du module sur le stator, en particulier sur le capot isolant (3), de sorte que des évidements (18) ou des passages (19) du support (7) sont joints à des moyens de liaison (16) du capot isolant (3), f) production d'une liaison par assemblage de forme entre les évidements (18) ou passages (19) du support (7) avec des moyens de liaison (16) du capot isolant (3) par matage à chaud des moyens de liaison (16), g) établissement d'un contact électrique entre chacun des crochets de contact (9) et des segments de fil d'enroulement (12) associés.

25. Procédé selon la revendication 23 ou 24, **caractérisé en ce que** la liaison électrique entre les crochets de contact (9) et les segments de fil d'enroulement (12) est réalisée par une liaison soudée, en particulier par soudage par résistance ou soudage laser.
